# EUROPEAN PATENT SPECIFICATION

(11) **EP 0 708 326 B1**
(45) Date of publication and mention of the grant of the patent: **03.04.2002**
(21) Application number: 95307338.4
(22) Date of filing: 17.10.1995
(51) Int. Cl.: G01N 23/18, G01B 11/24

(54) **Arrangement for the inspection of welded plate sections**
Einrichtung zur Prüfung von geschweissten Platten
Appareil d'inspection de plaques soudées

(30) Priority: 19.10.1994 FI 944895
(43) Date of publication of application: 24.04.1996
(73) Proprietor: KVAERNER MASA-YARDS OY, 00150 Helsinki (FI)
(72) Inventor: Gustafsson, Jukka, FIN-23100 Mynämäki (FI); Salmi, Jari, FIN-21220 Raisio (FI); Laiho, Heikki, Fin-20240 Turku (FI)
(74) Representative: Newby, Martin John

(56) References cited:
- EP-A- 0 570 212
- DE-C- 4 302 286
- WELDING JOURNAL: WELDING RESEARCH SUPPLEMENT, vol. 69, no. 3, 1 March 1990, ISSN 0043-2296 , pages 83S-97S, XP000113032 ROKHLIN S I ET AL: "Computerized radiographic sensing and control of an arc welding process"
- PATENT ABSTRACTS OF JAPAN vol. 010, no. 338 (P-516), 15 November 1986 & JP 61 142408 A (ISHIKAWAJIMA HARIMA HEAVY IND CO LTD ), 30 June 1986,

## Description

The invention relates to an arrangement according to the preamble of claim 1 for inspecting welded plate assemblies bent to an arcuate form and to a method of constructing a LNG-tank or the like, where the welded arcuate spherical plate assemblies of which the tank has been built have been inspected by an arrangement of the kind stated in claim 1.

An apparatus with the features of the preamble to claim 1 is known from DE-C-4 302 286.

When tanks for transport and/or storing of liquefied natural gas (LNG) are made, large and relatively thick aluminium plates are welded together and they are shaped to portions of a spherical surface, which portions are then joined to other spherical portions to form the tank. The diameter of a spherical LNG-tank is usually more than 20 m, even more than 40 m. The welded plate assemblies brought together to form the tank are extremely large since flat plate blanks which are as large as possible are used as starting material with a view to minimizing the dominant welding costs. The quality requirements for the weld joints are very high. The welded plate assemblies must also have exact shape and dimension, otherwise an acceptable final result is not obtainable.

The weld joints are inspected by several methods for revealing possible weld defects. A basic method is X-ray photography. An X-ray film cassette is placed at one side of the weld and at the other side an X-ray source is located, whereby X-ray pictures of the weld are obtainable. This method is applicable only to short weld portions, normally less than half a metre. X-ray photography on welds of 5 to 10 metres in length takes too long and includes a radiation risk for the operator. Weld defects are revealed only after the X-ray films have been developed. It might then be difficult to spot the exact location of each weld defect.

Since the weld joints in a LNG-tank must be inspected over their entire length, one would need thousands of X-ray films to fully inspect one tank, and storing the data would occupy a great deal of space, because the size of the X-ray film generally used is 100 x 480 mm.

Weld joints of plate assemblies for constructing LNG-tanks have also been inspected using a laser technique as described in JP-A-61 142 408.

For inspecting the shape of a welded plate assembly, a template is placed against the work-piece at different points and in different directions. This makes it possible to check the shape of the edge of a plate, but not its exact location in space. It is also difficult and expensive to manufacture and use large and precise templates. Templates of more than 10 metres in length cannot conveniently be used at all.

One aim of the invention is to essentially speed up and automate the inspection of weld joints in a LNG-tank and of the shape of welded plate assembles therefor, and to decrease the risk of error in the inspection work and in the analysis of that work. Another aim is to improve the safety of the inspection work and to decrease essentially the space required for inspection equipment and collected data. These aims are achieved with the arrangement set out in claim 1.

An arrangement according to the invention is particularly suitable for the inspection of large arcuate aluminium plate assemblies with a thickness of at least 20 mm. Excess weld material is removed by milling and the weld surface is usually finished by grinding. The initial steps of forming large plate assemblies are described in EP-A-570212.

An arcuate plate assembly, has one convex side and one concave side. According to the invention, the inspection site includes X-ray equipment for weld inspection and laser measuring devices for shape inspection. The surroundings of the inspection site can be protected from the X-rays used in the inspection. There is further a fastening jig, where plate assemblies can be inspected with respect to the weld joints as well as to their shape.

For the inspection of a plate assembly a carriage movable along a first rail system is provided on one side of the plate assembly which mounts an X-ray source. On the opposite side of the plate assembly a second rail system is provided for a second movable carriage with X-ray receiving and image transmitting means. For shape inspection laser measuring devices can be located at one side of the plate assembly, preferably extending in a direction perpendicular to the plate at its centre point. It is of advantage to carry out the inspection and measuring operations by remote control of the carriages. In this way all necessary inspections may be accomplished without moving the plate assembly, which simplifies the inspection process. The inspections may be carried out simultaneously, but preferably are effected one after another, so that the inspections do not interfere with each other in any way.

A preferred X-ray receiving and image transmitting means is an X-ray sensitive image intensifier tube acting as image source for a video or TV camera.

The laser measuring devices and the X-ray source are preferably located on the convex side of the plate assembly. This equipment and the rails of its rail system may then easily be moved aside from the plate assembly after completing the inspection work, so that the plate assembly can easily be removed from the inspection site. It is of advantage that the radiation source is above and the X-ray receiving and image transmitting means are located below the plate assembly. If X-rays are emitted in a downwards direction, a spreading of the radiation to the surroundings is more easily prevented. Additionally, the plates to be inspected can more easily be moved into and out from the inspection site, provided that the plates are to be inspected when supported mainly in a horizontal position.

The movements of the carriages are synchronized so that the inspection devices, the X-ray source, and the receiving and transmitting means automatically take such positions relative to each other during the inspection process that the required sequence of pictures of the weld are obtained. Normally, the carriages move about 10 cm. between inspection points.

The inspection may be monitored from an inspection room and defects may be detected immediately. The inspection room is protected from the X-ray radiation. There the inspection results are recorded. When defects are detected, the inspector records the position of the defect, after which the inspection devices are moved by remote control to the next inspection position.

In a preferred embodiment, both the first rail system and the second rail system follow the shape of the plate assembly over the inspection area. The inspection devices are thus, at all inspection points, approximately at the same distance from the surface of the plate assembly. It is of advantage that the inspection devices operate in each inspection point, approximately perpendicularly to the plate assembly. In this way the function of the inspection devices is best controlled.

It is of advantage, in shape inspection of a plate assembly, for the laser measuring device to be at a distance of at least 5 metres, preferably more than 9 metres from the plate assembly. The laser measuring device has a so-called three-dimensional laser measuring head, which is arranged far enough from and in a direction that preferably is approximately perpendicular to the plate assembly at its centre point. When measuring the shape of a plate assembly from its convex side the angle between any line normal to the plate assembly and the measuring direction remains within acceptable limits because of the considerable distance of the laser measuring head from the plate assembly.

The inspection devices on the side of the plate assembly that is opposite to the fastening jig, preferably the convex side of the plate assembly, are movable farther away from the fastening jig, so that one plate assembly may easily be replaced by another one. The inspection devices may, in particular at the convex side of the plate assembly be placed on a carriage, that moves supported by a third rail system, the rails of which are laterally outside the fastening jig. Since the rails of the third rail system are in this case so far from each other, at both sides of the fastening jig, the arrangement is stable and rigid.

The shape inspection data of a plate assembly and the inspection data of the weld joint are preferably recorded directly on a CD-disc. Compared to the conventional X-ray film cassette technique, the time required for taking pictures is almost identical, but no film developing is necessary using an image intensifier tube and a TV camera according to the invention. Thus, transport of X-ray films to and from the inspection site is not necessary, and the storage space required for inspection recordings is reduced by approximately 98% compared to the known art. Also safety at work is improved, since manual handling of X-ray film cassettes at a possibly labyrinthian inspection site is not required. The entire inspection work may be accomplished by a remotely-controlled process, in most cases totally automatically. If necessary, it is an easy matter to subsequently check the inspection data, even by using the same devices.

The invention also relates to a method of constructing a large spherical LNG-tank or the like with a diameter of more than 20 metres and made by welding together aluminium plates with a thickness of at least 20mm, in which the plate assemblies have been inspected by the means disclosed above.

The invention will now be further described, in greater detail, by way of example with reference to the accompanying drawings, in which:

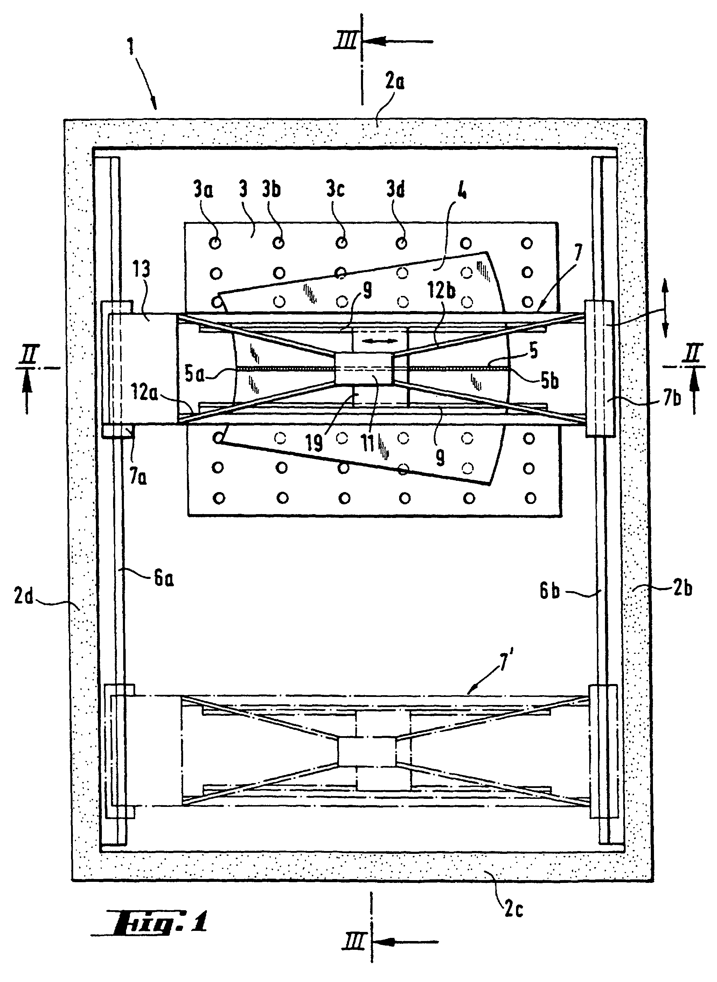

- Fig. 1 schematically shows a view from above of an inspection site according to the invention,
- Fig. 2 schematically shows a cross-section on the line II-II of Fig. 1,
- Fig. 3 schematically shows a cross-section on the line III-III of Fig. 2, and
- Fig. 4 shows, on an enlarged scale, details of the inspection devices schematically shown in Fig. 2.

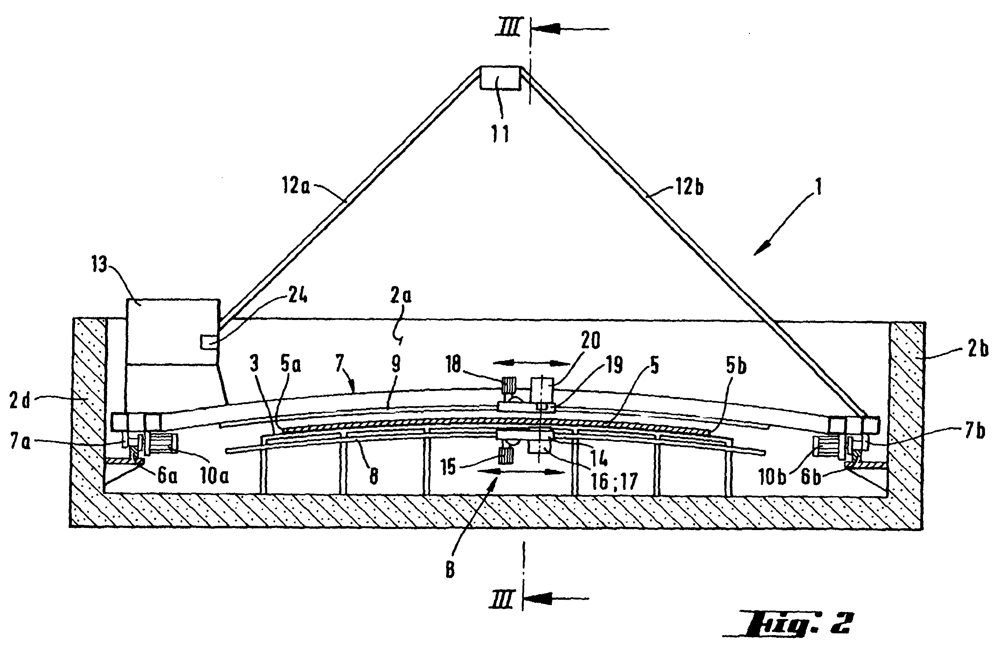

In the drawings, 1 indicates an inspection site surrounded by radiation protection walls 2a, 2b, 2c and 2d. Within the walls a fastening jig 3 is located with support points 3a, 3b, 3c, 3d, etc. including suction fastening devices (not shown) or other devices for fixing a plate assembly 4 in place thereon. A weld joint 5 of the plate assembly to be inspected extends between the points 5a and 5b. There are two parallel rails 6a and 6b located one on each side of the fastening jig 3. The weld joint 5a - 5b to be inspected is arranged to be approximately perpendicular to the rails 6a and 6b and approximately in the centre area of the fastening jig 3. A carriage 7, carried by a wheel arrangement and driven by carriage drive motors 10a and 10b shown in Fig 2, runs along the rails 6a and 6b, supported by wheel arrangements 7a and 7b. When the carriage 7 is moved away from the fastening jig area it may adopt the position shown at 7'.

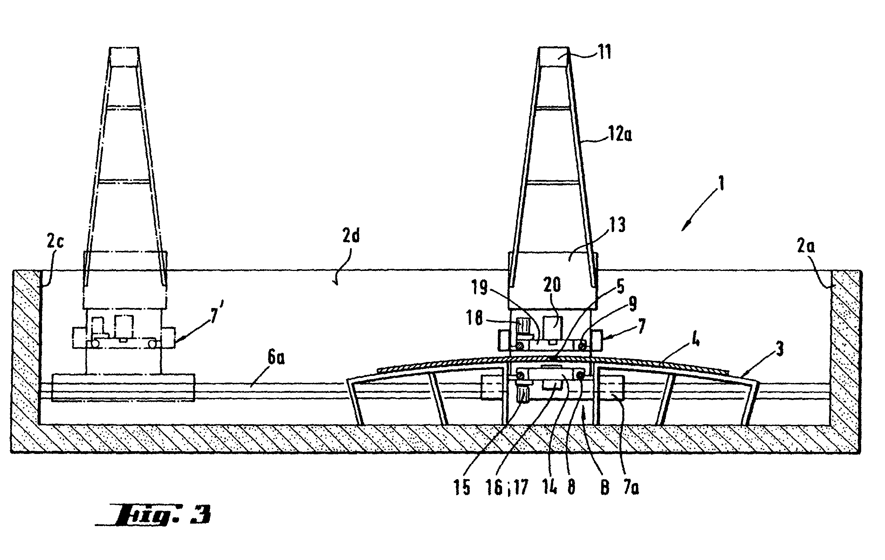

Figs. 2 and 3 show a second rail system 8 with rails and their supporting structures which is located below the central area of the fastening jig 3. There is another rail system 9 with rails and support structure located above the plate assembly 4. B indicates weld joint inspection devices mounted on both rail systems 8 and 9. More than 9 m above the plate assembly 4 there is a laser inspection device 11 for shape inspection. It has a measurement accuracy of about ± 1mm. It is supported by arms 12a and 12b. The measuring area of the device 11 covers the entire plate assembly 4. An inspection room 13 protected from X-ray radiation, is mounted on the carriage 7 to one side of the fastening jig 3.

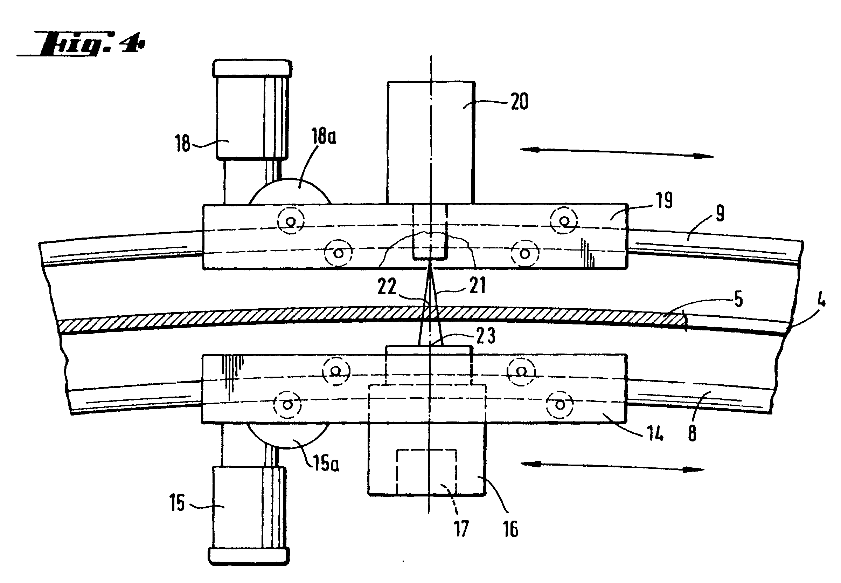

Fig. 4 shows a carriage 14 having an electric drive motor 15 and power transmission devices 15a for driving it along the rail system 8. The carriage 14 carries an image intensifier tube 16 creating a visual image which is viewed by a video camera 17. On the rail system 9 above the weld joint 5 of the plate assembly 4 there is a co-operating carriage 19 driven by an electric motor 18 and power transmission devices 18a. The carriage 19 is provided with a radiation source 20 generating X-rays 21 which pass approximately perpendicularly through the plate assembly 4, substantially at the centre point 22 of the X-ray beam. The movements of the carriages 14 and 19 are synchronized so that the centre point 23 of the image intensifier tube 16 follows the centre 22 of the X-ray beam 21.

In a preferred arrangement the X-rays 21 leaving the plate 4 impinge on a photocathode screen in the tube 16 releasing electrons which are accelerated and focused by electron optics to activate a fluorescent screen of the tube 16 which is viewed by the optics of the camera 17.

Inspection of the weld joint 5 is preferably started from one end of the weld joint. The carriages 14 and 19 are moved in stages of about 10 cm, from one inspection point to the next. As an auxiliary feature, one may use a scale tape made of lead at one side of the inspected weld joint but within the beam 21 and within the viewing range of the tube 16. The inspection data is recorded by devices 24 onto CD-discs. Normally, an inspector is visually monitoring the quality of the weld joint 5 at all times.

Shape inspection of the plate assembly 4 may be accomplished before or after the weld inspection. Stationary checking points (not shown) are arranged in association with the fastening jig 3, by means of which the measuring device 11 is initially calibrated. The desired quantity and position of the measuring points is determined, after which the measuring device 11 measures the actual shape of the surface of the plate assembly 4 and compares it with a theoretical part-spherical shape.

## Claims

1. An arrangement for inspecting an arcuate plate assembly of aluminium having opposite concave and convex sides and having a thickness of at least 20 mm, intended for the manufacture of large spherical LNG-tanks or the like, comprising means for supporting a plate assembly (4) to be inspected in a predetermined inspection position, and weld inspection means for inspecting at least one weld joint (5) of an arcuate plate assembly supported in said predetermined inspection position, said weld inspection means comprising, at one side of the predetermined inspection position of a plate assembly, a first carriage (19) movable along a first rail system (9), which first carriage (19) is provided with a radiation source (20) for X-ray material inspection and, at the other side of the predetermined inspection position of a plate assembly (4), a second carriage (14) movable along a second rail system (8), which second carriage (14) is provided with an X-ray receiving and image transmitting means (16, 17) for X-ray inspection, and means for synchronizing the movements of the first and second carriages (14, 19) so that the radiation source (20), and the X-ray receiving and image transmitting means (16, 17) are, during an inspection of a weld joint, automatically so situated in relation to each other that they can co-operate in the inspection phase, **characterised in that** said positioning means comprises a fastening jig (3) for holding a plate assembly in said one position, and **in that** a laser measuring device (11) is located sufficiently far from the predetermined inspection position of a plate assembly (4) to enable the arcuate shape of the plate assembly to be measured over at least substantially its entire area.

2. An arrangement according to claim 1, **characterized in that** the laser measuring device (11) and the radiation source (20) are disposed on the convex side of the arcuate plate assembly (4).

3. An arrangement according to claim 1 or 2, **characterized in that** the fastening jig (3) is arranged to support the plate assembly in a generally horizontal position, and **in that** the radiation source (20) is above and the receiving and transmitting means (16, 17) is below the plate assembly (4).

4. An arrangement according to any preceding claim, **characterized in that** both the second rail system (8) and the first rail system (9) mimic the shape of the arcuate plate arrangement (4) over the area of the weld joint to be inspected.

5. An arrangement according to any preceding claim, **characterized in that** the distance of the laser measuring device (11) from the plate assembly (4) to be inspected is at least 5 metres and preferably more than 9 metres.

6. An arrangement according to claim 2 or 3, or claim 4 or 5 when dependent on claim 2 or 3, **characterized in that** the first carriage and measuring device (20, 11) are movable together in a single unit to one side of the fastening jig (3) on a pair of rails (6a, 6b) laterally spaced from the fastening jig (3).

7. An arrangement according to any preceding claim, **characterized in that** means is provided for recording shape inspection data and weld inspection data on a CD-disc.

8. An arrangement according to any preceding claim, **characterized in that** the X-ray receiving means is an X-ray image intensifier tube (16) and the image transmitting means is a video camera (17) viewing an optical image created by the intensifier tube (16).

9. A method of inspecting an arcuate plate assembly of aluminium having opposite concave and convex sides and having a thickness of at least 20 mm for manufacture of a large spherical welded LNG-tank or the like, **characterized in that** the method comprises supporting a plate assembly (4) to be inspected in a predetermined inspection position such that there is, at one of the convex and concave sides of the plate assembly, a first carriage (19) movable along a first rail system (9), which first carriage (19) is provided with a radiation source (20) for X-ray material inspection and, at the other of the convex and concave sides of the plate assembly (4), a second carriage (14) movable along a second rail system (8), which second carriage (14) is provided with an X-ray receiving and image transmitting means (16, 17) for X-ray inspection, inspecting a weld in the plate assembly by synchronizing the movements of the first and second carriages (14, 19) so that the radiation source (20), and the X-ray receiving and image transmitting means (16, 17) are, during an inspection of a weld joint whilst the plate assembly is supported in its predetermined inspection position, automatically so situated in relation to each other that they can co-operate during the weld inspection, and employing a laser measuring device located sufficiently far from the plate assembly to enable the shape of the latter to be measured over substantially its entire area.

10. A method of constructing a large spherical welded LNG-tank or the like from a plurality of aluminium plate assemblies each having a thickness of at least 20 mm, **characterised in that** the method comprises testing each plate assembly according to the method of claim 9 and welding the plate assemblies (4) together to form the LNG-tank or the like.

## Patentansprüche

1. Anordnung zum Untersuchen einer gebogenen Plattenbaugruppe aus Aluminium mit gegenüberliegenden konkaven und konvexen Seiten und mit einer Dicke von wenigstens 20 mm, die zur Herstellung großer kugelförmiger LNG-Tanks oder dergleichen bestimmt ist, mit Mitteln zum Tragen einer zu untersuchenden Plattenbaugruppe (4) in einer vorbestimmten Untersuchungsstellung und Schweißnahtuntersuchungsmitteln zum Untersuchen zumindest einer Schweißnahtverbindung (5) einer in der vorbestimmten Untersuchungsposition gehaltenen gebogenen Plattenbaugruppe, wobei die Schweißnahtuntersuchungsmittel folgendes umfassen: auf einer Seite der vorbestimmten Untersuchungsposition einer Plattenbaugruppe einen ersten Schlitten (19), der längs eines ersten Schienensystems (9) beweglich ist, wobei der erste Schlitten (19) mit einer Strahlungsquelle (20) zur Röntgenstrahl-Materialuntersuchung versehen ist, und auf der anderen Seite der vorbestimmten Untersuchungsposition einer Plattenbaugruppe (4) einen zweiten Schlitten (14), der längs eines zweiten Schienensystems (8) beweglich ist, wobei der zweite Schlitten (14) mit einem Röntgenstrahlempfangs- und Bildübertragungsmittel (16, 17) zur Röntgenstrahluntersuchung versehen ist, und Mittel zum Synchronisieren der Bewegungen des ersten und des zweiten Schlittens (14, 19), so daß die Strahlungsquelle (20) und das Röntgenstrahlempfangs- und Bildübertragungsmittel (16, 17) während einer Untersuchung einer Schweißnahtverbindung automatisch so relativ zueinander liegen, daß sie in der Untersuchungsphase zusammenwirken können, **dadurch gekennzeichnet, daß** das Positioniermittel eine Befestigungsvorrichtung (3) zum Halten einer Plattenbaugruppe in der einen Position umfaßt und daß eine Lasermeßvorrichtung (11) ausreichend weit von der vorbestimmten Untersuchungsposition einer Plattenbaugruppe (4) entfernt angeordnet ist, um es zu ermöglichen, daß die gebogene Form der Plattenbaugruppe zumindest über ihre im wesentlichen ganze Fläche vermessen wird.

2. Anordnung nach Anspruch 1, **dadurch gekennzeichnet, daß** die Lasermeßvorrichtung (11) und die Strahlungsquelle (20) auf der konvexen Seite der gebogenen Plattenbaugruppe (4) angeordnet sind.

3. Anordnung nach Anspruch 1 oder 2, **dadurch gekennzeichnet, daß** die Befestigungsvorrichtung (3) so angeordnet ist, daß die Plattenbaugruppe in einer im großen und ganzen horizontalen Position getragen wird, und daß sich die Strahlungsquelle (20) über und das Röntgenstrahlempfangs- und Bildübertragungsmittel (16, 17) unter der Plattenbaugruppe (4) befindet.

4. Anordnung nach einem der vorhergehenden Ansprüche, **dadurch gekennzeichnet, daß** sowohl das zweite Schienensystem (8) als auch das erste Schienensystem (9) die Form der gebogenen Plattenanordnung (4) auf dem Bereich der zu untersuchenden Schweißnahtverbindung nachbilden.

5. Anordnung nach einem der vorhergehenden Ansprüche, **dadurch gekennzeichnet, daß** der Abstand der Lasermeßvorrichtung (11) von der zu untersuchenden Plattenbaugruppe (4) mindestens 5 Meter und vorzugsweise mehr als 9 Meter beträgt.

6. Anordnung nach Anspruch 2 oder 3 oder Anspruch 4 oder 5, wenn diese von Anspruch 2 oder 3 abhängig sind, **dadurch gekennzeichnet, daß** der erste Schlitten und die Meßvorrichtung (20, 11) zusammen als eine einzige Einheit auf einem von der Befestigungsvorrichtung (3) seitlich beabstandeten Paar Schienen (6a, 6b) auf eine Seite der Befestigungsvorrichtung (3) verschiebbar sind.

7. Anordnung nach einem der vorhergehenden Ansprüche, **dadurch gekennzeichnet, daß** Mittel zum Aufzeichnen von Formuntersuchungsdaten und Schweißnahtuntersuchungsdaten auf einer CD-Scheibe vorgesehen sind.

8. Anordnung nach einem der vorhergehenden Ansprüche, **dadurch gekennzeichnet, daß** das Röntgenstrahlempfangsmittel eine Röntgen-Bildverstärkerröhre (16) und das Bildübertragungsmittel eine Videokamera (17) ist, die ein optisches Bild betrachtet, das von der Bildverstärkerröhre (16) erzeugt wird.

9. Verfahren zum Untersuchen einer gebogenen Plattenbaugruppe aus Aluminium mit gegenüberliegenden konkaven und konvexen Seiten und mit einer Dicke von wenigstens 20 mm zur Herstellung eines großen kugelförmigen, geschweißten LNG-Tanks oder dergleichen, **dadurch gekennzeichnet, daß** das Verfahren folgendes umfaßt: das Tragen einer zu untersuchenden Plattenbaugruppe (4) in einer vorbestimmten Untersuchungsposition, so daß auf der konvexen oder konkaven Seite einer Plattenbaugruppe (4) ein erster Schlitten (19) vorhanden ist, der längs eines ersten Schienensystems (9) beweglich ist, wobei der erste Schlitten (19) mit einer Strahlungsquelle (20) zur Röntgenstrahl-Materialuntersuchung versehen ist, und auf der anderen, d.h. der konkaven oder konvexen Seite der Plattenbaugruppe (4) ein zweiter Schlitten (14) vorhanden ist, der längs eines zweiten Schienensystems (8) beweglich ist, wobei der zweite Schlitten (14) mit einem Röntgenstrahlempfangs- und Bildübertragungsmittel (16, 17) zur Röntgenstrahluntersuchung versehen ist, das Untersuchen einer Schweißnaht in der Plattenbaugruppe durch Synchronisieren der Bewegungen des ersten und des zweiten Schlittens (14, 19), so daß die Strahlungsquelle (20) und das Röntgenstrahlempfangs- und Bildübertragungsmittel (16, 17) während einer Untersuchung einer Schweißnahtverbindung, bei der die Plattenbaugruppe in ihrer vorbestimmten Untersuchungsposition getragen wird, automatisch so relativ zueinander liegen, daß sie während der Schweißnahtuntersuchung zusammenwirken können, und Verwenden einer Lasermeßvorrichtung, die ausreichend weit von der Plattenbaugruppe entfernt angeordnet ist, um es zu ermöglichen, daß die Form der letzteren zumindest über ihre im wesentlichen ganze Fläche vermessen wird.

10. Verfahren zum Bau eines großen kugelförmigen, geschweißten LNG-Tanks oder dergleichen aus einer Vielzahl von Aluminiumplattenbaugruppen, die jeweils eine Dicke von wenigstens 20 mm aufweisen, **dadurch gekennzeichnet, daß** das Verfahren das Prüfen jeder Plattenbaugruppe nach dem Verfahren von Anspruch 9 und das Verschweißen der Plattenbaugruppen (4) miteinander umfaßt, um den LNG-Tank oder dergleichen zu formen.

## Revendications

1. Agencement pour inspecter un ensemble de plaque courbe, en aluminium, présentant des côtés opposés concave et convexe et ayant une épaisseur d'au moins 20 mm, destiné à la fabrication de grandes cuves sphériques à GNL ou similaires, comprenant un moyen pour soutenir un ensemble de plaque (4) à inspecter dans une position prédéterminée d'inspection et un moyen d'inspection de soudure pour inspecter au moins un joint soudé (5) d'un ensemble de plaque courbe soutenu dans ladite position prédéterminée d'inspection, ledit moyen d'inspection de soudure comprenant d'un côté de la position prédéterminée d'inspection d'un ensemble de plaque un premier chariot (19) apte à être déplacé le long d'un premier système de rails (9), lequel premier chariot (19) est doté d'une source de rayonnement (20) pour l'inspection du matériau par rayons X et, de l'autre côté de la position prédéterminée d'inspection d'un ensemble de plaque (4), un deuxième chariot (14) apte à être déplacé le long d'un deuxième système de rails (8), lequel deuxième chariot (14) est doté d'un moyen de réception de rayons X et de transmission d'images (16, 17) pour l'inspection par rayons X, et un moyen pour synchroniser les déplacements des premier et deuxième chariots (14, 19) de telle sorte que la source de rayonnement (20) et le moyen de réception de rayons X et de transmission d'images (16, 17) soient situés automatiquement en relation l'un par rapport à l'autre pendant l'inspection d'un joint soudé de telle sorte qu'ils puissent coopérer dans la phase d'inspection, **caractérisé en ce que** ledit moyen de positionnement comprend une monture de fixation (3) pour maintenir un ensemble de plaque dans ladite une position, et **en ce qu'**un dispositif (11) de mesure par laser est situé suffisamment loin de la position prédéterminée d'inspection d'un ensemble de plaque (4) pour permettre à la forme courbe de l'ensemble de plaque d'être mesurée sur au moins essentiellement la totalité de sa superficie.

2. Agencement selon la revendication 1, **caractérisé en ce que** le dispositif (11) de mesure par laser et la source de rayonnement (20) sont disposés sur le côté convexe de l'ensemble de plaque courbe (4).

3. Agencement selon la revendication 1 ou 2, **caractérisé en ce que** la monture de fixation (3) est agencée de manière à soutenir l'ensemble de plaque dans une position généralement horizontale, et **en ce que** la source de rayonnement (20) est située au-dessus et le moyen de réception et de transmission (16, 17) est situé en dessous de l'ensemble de plaque (4).

4. Agencement selon l'une quelconque des revendications précédentes, **caractérisé en ce que** tant le deuxième système de rails (8) que le premier système de rails (9) imitent la forme de l'agencement de plaque courbe (4) sur la zone du joint soudé à inspecter.

5. Agencement selon l'une quelconque des revendications précédentes, **caractérisé en ce que** la distance entre le dispositif (11) de mesure par laser et l'ensemble de plaque (4) à inspecter est d'au moins 5 mètres et est de préférence supérieure à 9 mètres.

6. Agencement selon la revendication 2 ou 3 ou selon la revendication 4 ou 5 dans la mesure où elles dépendent de la revendication 2 ou 3, **caractérisé en ce que** le premier chariot et le dispositif de mesure (20, 11) peuvent être déplacés ensemble en une seule unité sur un côté de la monture de fixation (3), sur une paire de rails (6a, 6b) espacés latéralement de la monture de fixation (3).

7. Agencement selon l'une quelconque des revendications précédentes, **caractérisé en ce qu'**un moyen est prévu pour enregistrer les données d'inspection de forme et les données d'inspection de soudage sur un disque CD.

8. Agencement selon l'une quelconque des revendications précédentes, **caractérisé en ce que** le moyen de réception de rayons X est un tube (16) intensificateur d'images par rayons X, et le moyen de transmission d'images est une caméra vidéo (17) visualisant une image optique créée par le tube intensificateur (16).

9. Procédé d'inspection d'un ensemble de plaque courbe, en aluminium, présentant des côtés opposés concave et convexe et ayant une épaisseur d'au moins 20 mm, destiné à la fabrication d'une grande cuve sphérique soudée à GNL ou similaires, **caractérisé en ce que** le procédé comporte les étapes consistant à soutenir un ensemble de plaque (4) à inspecter dans une position prédéterminée d'inspection de telle sorte qu'il existe, sur l'un parmi les côtés convexe et concave de l'ensemble de plaque, un premier chariot (19) apte à être déplacé le long d'un premier système de rails (9), lequel premier chariot (19) est doté d'une source de rayonnement (20) pour l'inspection du matériau par rayons X et, sur l'autre des côtés convexe et concave de l'ensemble de plaque (4), un deuxième chariot (14) apte à être déplacé le long d'un deuxième système de rails (8), lequel deuxième chariot (14) est doté d'un moyen de réception de rayons X et de transmission d'images (16, 17) pour l'inspection par rayons X, à inspecter une soudure de l'ensemble de plaque par synchronisation des déplacements du premier et du deuxième chariot (14, 19) de telle sorte que la source de rayonnement (20) et le moyen de réception de rayons X et de transmission d'images (16, 17) soient situés automatiquement en relation l'un par rapport à l'autre pendant une inspection d'un joint soudé pendant que l'ensemble de plaque est soutenu dans sa position prédéterminée d'inspection, de telle sorte qu'ils puissent coopérer pendant l'inspection de la soudure, et à utiliser un dispositif de mesure par laser situé suffisamment loin de l'ensemble de plaque pour permettre à la forme de cette dernière d'être mesurée sur essentiellement la totalité de sa superficie.

10. Procédé de construction d'une grande cuve sphérique soudée à GNL ou similaires, à partir d'une pluralité d'ensembles de plaque d'aluminium présentant chacun une épaisseur d'au moins 20 mm, **caractérisé en ce que** le procédé comprend le test de chaque ensemble de plaque selon le procédé de la revendication 9 et le soudage des ensembles de plaque (4) ensemble pour former la cuve à GNL ou similaire.
